(19) Europäisches Patentamt

European Patent Office

Office européen des brevets

(11) EP 1 314 639 A2

## (12) EUROPEAN PATENT APPLICATION

(43) Date of publication:
28.05.2003 Bulletin 2003/22

(51) Int Cl.⁷: **B63B 1/06**

(21) Application number: 02025448.8

(22) Date of filing: 15.11.2002

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(30) Priority: **22.11.2001 JP 2001357639**<br><br>(71) Applicant: **Kawasaki Jukogyo Kabushiki Kaisha Kobe-shi, Hyogo 650-8670 (JP)**<br><br>(72) Inventors:<br> • **Iwasaki, Yasunori**<br>  **Miki-shi, Hyogo 673-0533 (JP)** | • **Ebira, Kazuyuki**<br>  **Kobe-shi, Hyogo 651-2274 (JP)**<br> • **Komura, Atsushi**<br>  **Kobe-shi, Hyogo 651-2242 (JP)**<br> • **Ueda, Takeshi**<br>  **Kobe-shi, Hyogo 651-1132 (JP)**<br> • **Ikeda, Hiroshi**<br>  **Kobe-shi, Hyogo 655-0033 (JP)**<br><br>(74) Representative:<br>**Knoblauch, Andreas, Dr.-Ing. et al**<br>**Schlosserstrasse 23**<br>**60322 Frankfurt (DE)** |

### (54) **Bow form of a ship**

(57) Disclosed is a bow form of a ship that has at least one box-shape hold and travels at a medium speed which is higher than that of a tanker or a bulk carrier and corresponds to a Froude's number of 0.18 - 0.23, the bow form being obtained by substantially vertically upwardly extending a forefront end line (1a) of a bow forming a bow profile from a lower end position of the fore end (3) under a designed load waterline (2) to an upper deck (4) to allow the forefront end line (1a) to substantially conform to a fore perpendicular (FP) and to a forefront end (3) defining length overall (Loa) of the ship and by sharpening a waterline shape in a range of the vertical extension.

Fig. 1

**Description**

The invention relates to a ship bow form capable of greatly reducing the wave resistance at the bow of a ship travelling (sailing) at a medium speed higher than that of a tanker or a bulk carrier (Froude's number (Fn) = 0.18 - 0.23).

Herein, the Froude's number (Fn) is expressed as:

$$Fn = V/ \sqrt{(LwL \times g)}.$$

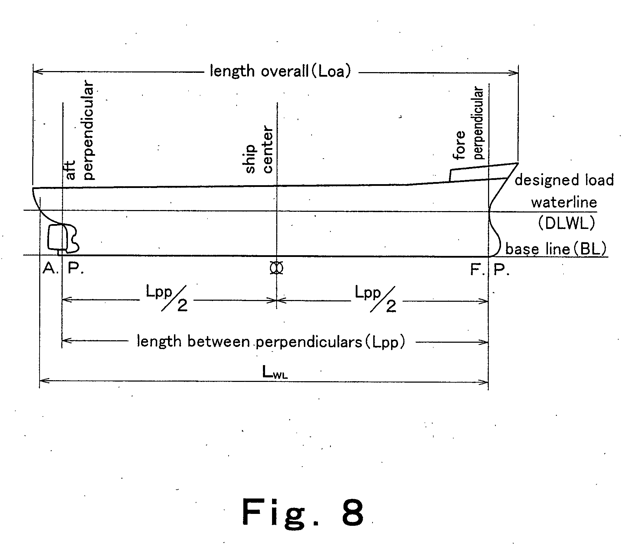

Fig. 8 shows a definition of LwL and the like. Referring to Fig. 8, Loa represents the length overall of the ship, i.e., the horizontal distance from the forefront end of the ship to the rearmost end of the ship. Lpp represents the length between perpendiculars, i.e., the horizontal distance from the fore perpendicular (FP) of the ship to the aft perpendicular (AP) of the ship. The fore perpendicular (FP) is defined as a vertical line passing through a point at which the designed load waterline (DLWL) crosses the front face of the bow. The aft perpendicular (AP) is defined as a vertical line passing through the rear face of a rudder post of the ship or the center of a rudder stock of the ship having no rudder post. LwL represents the horizontal distance from a point at which the designed load waterline crosses the front end of the ship to a point at which the waterline crosses the rear end of the ship.

The resistance acting on a ship travelling in the sea includes a still water resistance acting on the ship in a condition without ocean waves and an additional wave resistance which is acting on the ship travelling through waves of encounter sea and is greater than that acting on the ship travelling in still water. The still water resistance includes the friction resistance, the pressure resistance, and the wave resistance. The friction resistance is acting on the ship by friction between the ship surface and the water. The pressure resistance is generated in a region where the water flow in the vicinity of the aft hull surface is separated, and in this region, a negative pressure is generated, thereby dragging the ship rearward. The wave resistance is generated when the ship travelling on the water surface makes waves around the bow, that is, the energy required for making the waves acting on the ship as resistance. When these waves are broken, a wave breaking resistance is generated and combined with the wave making resistance, thereby resulting in an increased wave resistance.

Conventionally, the bow form for the purpose of reducing the resistance in waves of actual sea has been less considered (For example, see Japanese Laid-Open Patent Application Publication No. 2000 - 335478), whereas the bow form for the purpose of reducing the still water resistance has been frequently considered (For example, see Japanese Laid-Open Patent Application Publication Nos. Sho. 59 - 26386, 57- 26074, and 53 - 64392).

This is because a resistance test (model test using a model ship) is generally and simply conducted in still water for the purpose of verifying the performance of the ship in naval architecture, and this test is sufficient to evaluate the performance of the ship.

Among displacement ship for transporting resources in large quantity, it is considered that the ship that has box-shape holds and travels at medium ship speed relatively higher than that of the tanker or the bulk carrier (Froude's number (Fn) = approximately 0.18 - 0.23), for example, LPG ship, needs to arrange the box-shape holds to the fore part of the bow for increasing the transportation efficiency. Actually, however, the entering of a ship into a port is commonly restricted by the length overall (Loa), and such restriction tends to increase the waterline entrance angle α of the bow form.

While a ship having such a large waterline entrance angle α is travelling at the medium ship speed, the water surface around the bow is greatly raised because of the large waterline entrance angle α, thereby causing wave breaking from the wave crest of the bow wave.

When these phenomena are seen from the viewpoint of propulsive performance of the ship, the bow wave generating wave breaking causes a large wave resistance, which leads to significantly increased horse power and fuel oil consumption (FOC). Under these circumstances, a reduction of the waves at the bow of the above ship that travels at the medium speed has been a challenge to naval architect.

As a solution of the above-mentioned challenge, conventionally, a portion of the bow form below the designed load waterline is extended forward of the FP to substantially conform to the forefront position defining the Loa, thereby forming a so-called bulbous bow, and the associated bulb is designed to have a required volume. Such a structure produces an interaction effect due to a phase difference between the waves of the main body originated in the FP and the waves generated by the bulb, and makes it possible to reduce the wave resistance. However, the method utilizing wave making interaction is not helpful in reducing the wave resistance when the wave originated in the FP is so big as to cause wave breaking, because the wave generated by the bulb is relatively small.

Japanese Laid-Open Patent Application Publication No. Sho. 59 - 26386 discloses that, for the purpose of reducing the wave breaking resistance without changing the length between the perpendiculars (Lpp) and the length overall (Loa), a bow profile located above the designed load waterline is greatly protruded forwardly and its horizontal cross section is pointed at the fore end of the bow with a gradual decrease in breadth. However, since such a ship is configured to have the bow form greatly changed from the vicinity of the designed load waterline, the water flow around the bow is disordered while the ship is travelling at the medium speed, thereby causing an increase of the ship resistance.

The invention deals with the problem to provide a bow form optimum for a ship which has at least one box-shape hold and travels at a medium speed higher than that of a tanker or a bulk carrier, for the purpose of reducing the wave resistance at the bow.

To solve this problem according to the invention there is provided a bow form of a ship that has at least one box-shape hold and travels at medium ship speed which is higher than that of a tanker or a bulk carrier and corresponds to a Froude's number of 0.18 - 0.23, the bow form being obtained by substantially vertically upwardly extending a forefront end line from a point slightly under the designed load waterline (DLWL) to a height including a waterline of a portion of the bow that contacts a raised water surface at least at the design ship speed, (the resulting form is called "upright stem" form) and by sharpening a waterline shape of the bow form in a range of the vertical extension.

In such a structure, since a certain range of the fore end of the ship that has the at least one box-shape hold and travels at the medium ship speed is upright-stem shaped, and the waterline entrance angle at the fore end portion of the bow is sharpened, the degree of raised water surface around the fore end at the design ship speed can be reduced, and further, occurrence of a wave breaking around the bow can be prevented while ensuring the at least one box-shape hold. Consequently, the wave breaking resistance can be significantly reduced. Since the bow form is upright-stem shaped from a point below the designed load waterline to a height including the waterline of the portion that contacts the raised water surface, similar effects can be provided even in a ballast condition, in which the waterline is lower than the designed load waterline.

According to the invention, there is further provided a bow form of a ship that has at least one box-shape hold and travels at a medium ship speed which is higher than the ship speed of a tanker or a bulk carrier and corresponds to a Froude's number of 0.18 - 0.23, the bow form being obtained by substantially vertically upwardly extending a forefront end line of a bow forming a bow profile from a lower end position of the fore end under a designed load waterline to an upper deck to allow the forefront end line to substantially conform to a fore perpendicular and to a forefront end defining the length overall of the ship and by sharpening a waterline shape in a range of the vertical extension.

According to the above structure, the ship that has at least one box-shape hold and travels at the medium ship speed is upright-stem shaped by locating the FP to the forefront position of the length overall, and the waterline entrance angle of the fore end portion of the bow is sharpened. Thereby, the ship can have at least one large box-shape hold for increased transportation efficiency while meeting the restriction of the length overall. Also, the degree of raised water surface around the fore end at the design ship speed is reduced, and further, occurrence of the wave breaking around the bow can be prevented. As a result, both of the wave making resistance and the wave breaking resistance can be significantly reduced. Since the fore end portion of the bow from below the designed load waterline to above the designed load waterline is sharpened, the wave making resistance and the wave breaking resistance can be reduced while the ship is travelling even in the ballast condition in which the waterline is lower than the designed load waterline as well as in a full load condition.

According to the invention, there is further provided a bow form of a ship having any one of the above-mentioned bow profiles, the bow form being configured such that a waterline shape of a portion of the bow that contacts a raised water surface at least at the design ship speed has a waterline entrance angle of 10 degrees or less with respect to a ship centerline and an imaginary breadth at a forefront position of the bow form obtained by extending the waterline to the forefront position is set to 600 mm or less.

With such a structure, since the waterline entrance angle of the portion of the bow that contacts the raised water surface is reduced and its fore end portion is sharpened, the water surface around the fore end is smoothed and a raise of the water surface is reduced as described above. As a result, both of the wave making resistance and the wave breaking resistance can be significantly reduced.

In the above bow form of a ship, the shape of a frame line around the bow fore end is continuous from a maximum breadth position of a portion of the bow which is located lower than the designed load waterline to a height including the waterline of the portion that contacts a raised water surface at least at the design ship speed. This results in the frame line being continuous from the fore end of the ship toward the rear end. As a result, both of the wave making resistance and the wave breaking resistance can be effectively reduced, which leads to a reduced total ship resistance.

With the above-mentioned bow forms, the wave resistance (the wave making resistance and the wave breaking resistance) can be reduced to about its half and the horse power can be correspondingly reduced by about 10%.

The invention will more fully be apparent from the following detailed description of the accompanying drawings of a preferred embodiment, in which

Fig. 1 shows a bow profile along a centerline of a ship that travels at a medium speed to which the invention is applied, in which a dotted line is drawn for illustrating the difference between the bow profile of a conventional ship and the bow profile of the invention;

Fig. 2 shows a waterline shape of a bow;

Fig. 3 shows the shape of a frame line of the FP (fore perpendicular) of the invention in comparison with a conventional frame line, in which a solid line of a right half portion represents the frame line of the invention, and a dotted line of a left half portion represents the conventional frame line;

Fig. 4 shows waves in a model test of the bow form of the invention;

Fig. 5 shows waves in the model test of the conventional bow form;

Fig. 6 is a graph showing a comparison between the conventional bow form and the bow form of the invention, where the vertical axis indicates the wave resistance coefficient $\gamma_W$ and the horizontal axis indicates the Froude's number Fn;

Fig. 7 is a graph with an estimated horse power on a vertical axis and the ship speed on a horizontal axis; and

Fig. 8 shows a definition of the main dimensions, such as Loa, of a ship.

The invention is applied to a ship designed to have at least one box-shape hold and going at a medium ship speed as design ship speed which is higher than that of a tanker or a bulk carrier, for example an LPG ship. Herein, the medium ship speed is in a speed range, in which the Froude's number is approximately 0.18 - 0.23.

(1) Bow Profile of a Ship to which the Invention is applied

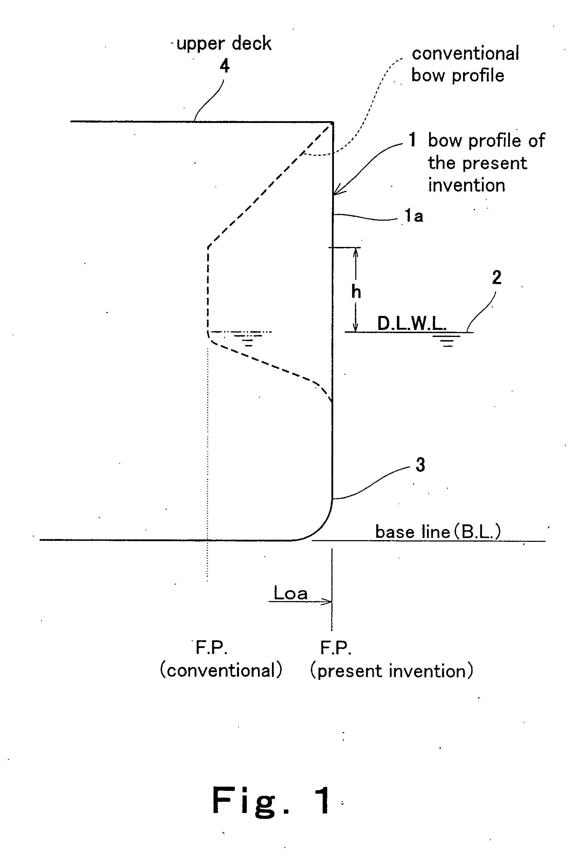

In Fig. 1 the bow profile 1 of a ship of the invention is shown by a solid line. An important portion of the bow profile 1 is from the vicinity of a designed load waterline (DLWL) 2 to a portion located above the waterline DLWL, i.e., a bow profile below a height h including a waterline shape of a portion which contacts the raised water surface at the design ship speed. The height h is associated with the Froude's number, the waterline shape and main dimensions, and is approximately 3 m from the designed load waterline 2 of a large ship.

In a preferred embodiment of the bow form of the invention, a forefront end line 1a of the bow form forming the bow profile 1 is extended substantially vertically upwardly from a lower end position of a fore end 3 below the designed load waterline 2 to an upper deck 4 so as to allow the forefront end line 1a to substantially conform to the fore perpendicular FP and to the forefront end of the length overall (Loa) of the ship. It should be appreciated that a slight slope from the lower end of the fore end to the designed load line, and a slight slope from the designed load waterline to the upper deck may be involved in the technical idea of the invention without departing from a scope of the invention.

As a result, it is possible to obtain a ship having a bow profile in the form of an upright stem in which the FP of the ship travelling at the medium ship speed is located at the forefront position defining the Loa. Thereby, the water line entrance angle of the fore end portion can be sharpened, and the ship can have at least one large box-shape hold for increased transportation efficiency while meeting restriction of the length overall of the ship.

In addition, since the degree of raised water surface at the fore end at the design ship speed is reduced, and further, occurrence of the wave breaking around the bow can be prevented, the wave resistance can be significantly reduced. Further, since the fore end portion from below the designed load waterline to above the designed load waterline is sharpened, the wave resistance can be reduced while the ship is travelling in the ballast condition in which the waterline is lower than the designed load waterline, as well as in the full load condition. On the other hand, in the conventional bow profile, its lower portion is configured such that the its profile recedes from the forefront position of the bow in the vicinity of the designed load waterline, and the receded position conforms to the FP. That is, in the conventional bow form, the lower portion is configured such that a bulbous bow is protruded from the FP.

(2) Shape of Waterline of the Bow of a Ship to which the Invention is applied

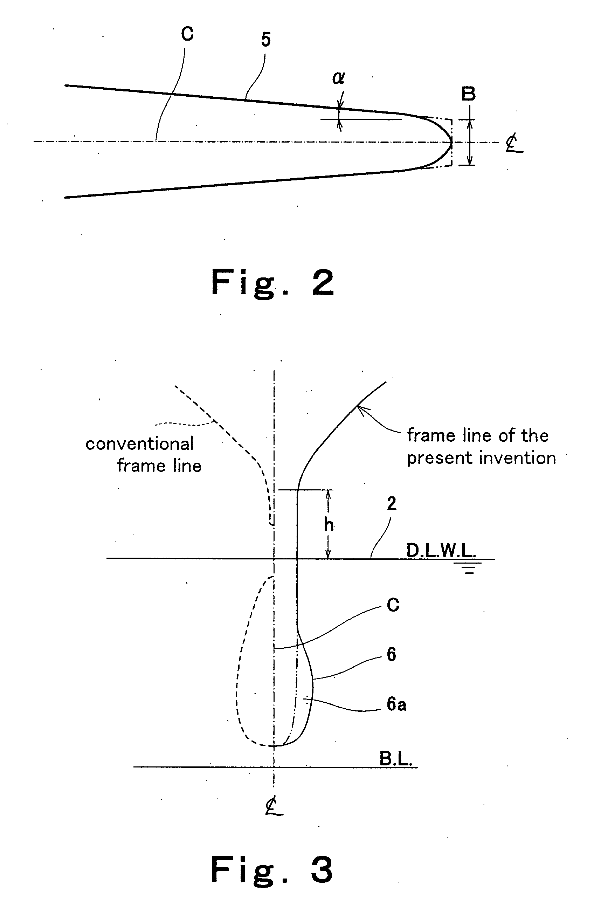

As shown in Fig. 2, the horizontal cross section of the bow having the above-mentioned bow profile, is shaped such that the waterline entrance angle $\alpha$ of the portion of the bow that contacts the raised water surface at the design ship speed (angle formed between the ship centerline C and a ship side line 5 is set to 10 degrees or less and an imaginary breadth B at the forefront position obtained by extending the waterline to the forefront position is set to 600 mm or less.

With such a configuration, the waterline shape at the fore end of the bow which contacts the raised water surface is sharpened and makes a smooth water surface of the flow around the bow, thereby greatly reducing the wave resistance. Such a structure of the fore end of the bow is smoothly curved and entirely stream-line shaped such that its frame is continuous to the fore end. In other words, such a structure is not an additional structure of the bow.

(3) Shape of Frame Line of a Ship to which the Invention is applied

Referring to Fig. 3, the frame line of the invention from the FP of the conventional ship in Fig. 1 to the fore end, which has the above identified bow profile and waterline shape, is continuous from a maximum breadth position 6 under the designed load waterline 2 to the height h including the waterline of the portion that contacts the raised water surface at least at the design ship speed.

Such continuity is applied from the lower end position of the fore end on the ship centerline below the designed load waterline to the waterline that contacts the raised water surface at the design ship speed.

As shown in Fig. 3, the lower bow form at the fore end may be configured to be smoothed as indicated by a phantom line. Alternatively, as indicated by a solid line, the upright stem form may be obtained by locating the FP to substantially conform to the forefront position defining the Loa while ensuring a bulb volume 6a to some degrees at the lower portion.

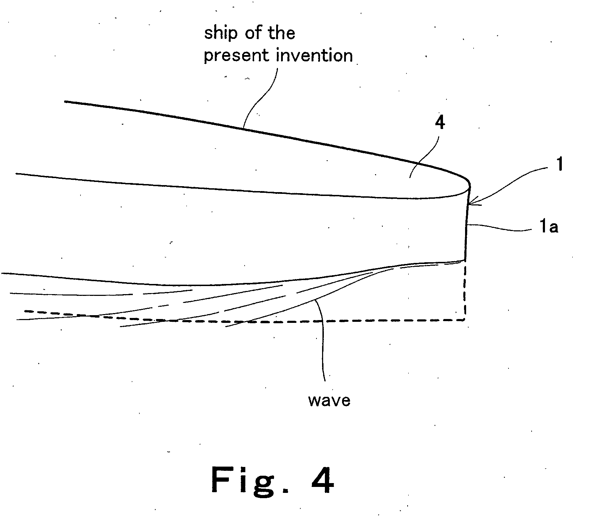

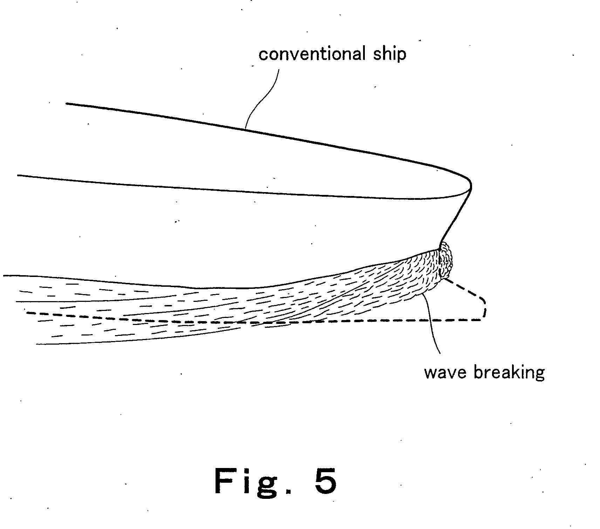

Fig. 4 is showing waves in a model test of the bow form according to the invention. Fig. 5 is showing waves in a model test of the conventional bow form, for illustrating comparison with the waves shown in Fig. 5. According to the comparison between these model tests, the rearward raised waves from the fore end are less and the wave breaking is not recognized in the bow form of the invention, whereas it is clearly recognized that the waves are greatly raised and the rearward wave breaking greatly occurs in the conventional bow form shown in Fig. 5.

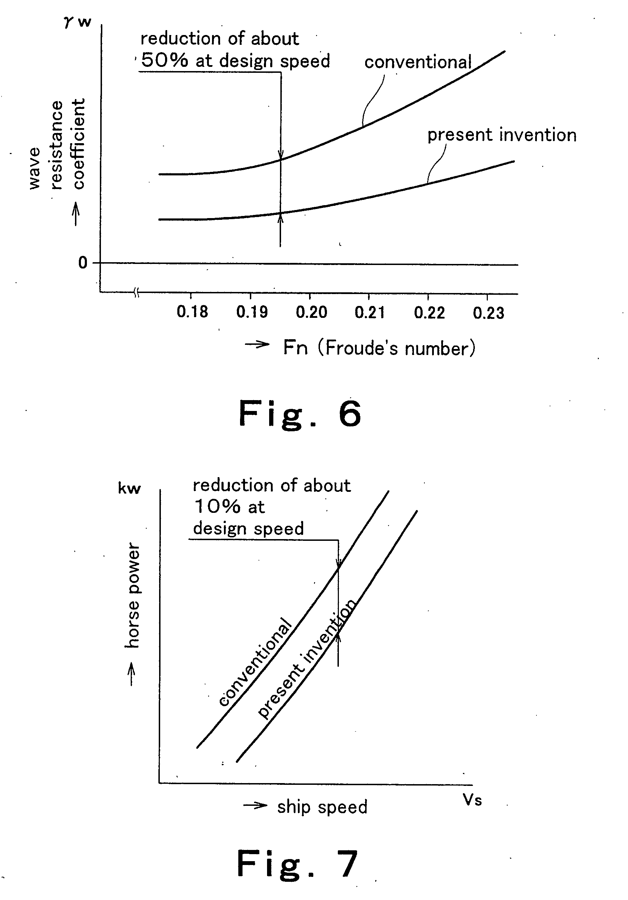

Fig. 6 is a graph showing an analysis of the results of the model test from the view point of reduction of the wave resistance. In Fig. 6, the vertical axis indicates the wave resistance coefficient $\gamma$ w and the horizontal axis indicates the Froude's number Fn. As can be seen from this graph, the wave resistance at the bow of the ship that travels at the medium ship speed can be reduced to its half at the design ship speed. Fig. 7 is showing a graph of a power curve comparison of the wave resistance between the invention and the conventional bow form, where the vertical axis indicates an estimated horse power and the horizontal axis indicates the ship speed. As can be seen from this graph, the horse power can be reduced by about 10% in a required horse power ratio at the design ship speed.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within meters and bounds of the claims, or equivalence of such meters and bounds thereof are therefore intended to be embodied by the claims.

## Claims

1. A bow form of a ship that has at least one box-shape hold and travels at a medium speed which is higher than that of a tanker or a bulk carrier and corresponds to a Froude's number of 0.18 - 0.23,

   the bow form being obtained by substantially vertically upwardly extending a forefront end line (1a) from a point slightly under a designed load waterline (2) to a height including a waterline of a portion of the bow that contacts a raised water surface at least at the design ship speed, and by sharpening a waterline shape of the bow form in a range of the vertical extension.

2. A bow form of a ship that has at least one box-shape hold and travels at a medium speed which is higher than that of a tanker or a bulk carrier and corresponds to a Froude's number of 0.18 - 0.23,

   the bow form being obtained by substantially vertically upwardly extending a forefront end line (1a) of a bow forming a bow profile from a lower end position of the fore end (3) under a designed load waterline (2) to an upper deck (4) to allow the forefront end line (1a) to substantially conform to a fore perpendicular (FP) and to a forefront end defining the length overall (Loa) of the ship and by sharpening a waterline shape in a range of the vertical extension.

3. A bow form of a ship having the bow profile according to Claim 1 or 2, the bow form being configured such that a waterline shape of a portion of the bow that contacts a raised water surface at least at the design ship speed has a waterline entrance angle ($\alpha$) at 10 degrees or less with respect to a ship centerline (C) and an imaginary breadth (B) at a forefront position of the bow form obtained by extending the waterline to the forefront position is set to 600mm or less.

4. The bow form of a ship according to any one of the claims 1 - 3, wherein the shape of a frame line is continuous from a maximum breadth position of a portion of a bow which is lower than the designed load waterline (2) to a height including the waterline of the portion that contacts the raised water surface at least at the design ship speed.

upper deck
**4**

conventional
bow profile

**1** bow profile of
the present
invention

**1a**

h

**2**

D.L.W.L.

**3**

base line (B.L.)

Loa

F.P.
(conventional)

F.P.
(present invention)

# Fig. 1

C    5    α    B

**Fig. 2**

conventional
frame line

frame line of the
present invention

h

2

D.L.W.L.

C

6

6a

B.L.

**Fig. 3**

ship of the
present invention

4

1

1a

wave

# Fig. 4

conventional ship

wave breaking

# Fig. 5

**Fig. 6**

**Fig. 7**

length overall (Loa)

aft perpendicular

ship center

fore perpendicular

designed load waterline (DLWL)

base line (BL)

A. P.

F. P.

$Lpp/2$

$Lpp/2$

length between perpendiculars (Lpp)

$L_{WL}$

# Fig. 8